Europäisches Patentamt

European Patent Office

Office européen des brevets

(19)

(11) Numéro de publication: **0 006 804**
**B1**

(12) **FASCICULE DE BREVET EUROPEEN**

(45) Date de publication du fascicule du brevet: **13.04.83**

(21) Numéro de dépôt: **79400404.4**

(22) Date de dépôt: **19.06.79**

(51) Int. Cl.³: **G 01 S 1/44,** G 01 S 13/74,
G 01 S 13/14,
G 01 R 23/00, G 04 F 10/04

(54) **Décodeur de précision sur la première impulsion d'une paire.**

(30) Priorité: **26.06.78 FR 7818968**

(43) Date de publication de la demande:
**09.01.80 Bulletin 80/1**

(45) Mention de la délivrance du brevet:
**13.04.83 Bulletin 83/15**

(84) Etats contractants désignés:
**DE GB IT NL**

(56) Documents cités:
**DE - B - 2 350 198**
**FR - A - 2 209 259**
**GB - A - 1 386 183**
**US - A - 3 618 085**
**US - A - 3 675 127**
**US - A - 3 940 764**
**US - A - 3 971 920**

(73) Titulaire: **LMT RADIO PROFESSIONNELLE**
**46-47, Quai Alphonse Le Gallo**
**F-92103 Boulogne-Billancourt (FR)**

(72) Inventeur: **Joguet, Jean Claude LE MATERIEL**
**TELEPHONIQUE**
**46-47 Quai Alphonse Le Gallo**
**F-92103 Boulogne Billancourt Cedex (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

## Décodeur de précision sur la première impulsion d'une paire

La présente invention est relative à des décodeurs d'impulsions codées utilisés notamment dans les transpondeurs ou répondeurs de systèmes de radionavigation. Elle porte plus précisément sur un décodeur de précision de paires d'impulsions pour systèmes TACAN ou DME.

Dans ces derniers systèmes, l'information de distance est obtenue par la mesure du temps qui sépare l'interrogation de l'appareil de bord de la réponse de l'équipement au sol (balise). Les impulsions des paires d'interrogation ou de réponse ont un espacement qui constitue un code, plusieurs espacements ou "modes" pouvant être utilisés.

L'un des principaux problèmes de la mesure du temps qui sépare l'interrogation de la réponse est celui de la précision de détection de l'instant significatif aussi bien de la réponse que de l'interrogation.

Dans les équipements déjà anciens l'instant significatif est pris sur le front avant de la seconde impulsion. Un des inconvénients de ce choix réside dans le fait que, dans certains cas, des échos de la première impulsion chevauchent la seconde, perturbent la détection de l'instant significatif et altèrent ainsi la précision du système.

Pour pallier ces inconvénients, la décision a été prise par les instances internationales de choisir l'instant significatif sur le front avant de la première impulsion, d'où le nom de "décodage sur première impulsion" donné au procédé.

Ce décodage sur première impulsion ne pose pas de problème particulier dans le cas où le temps d'arrivée d'une paire d'impulsions intéressantes est grossièrement connu: c'est le cas notamment d'un appareil de bord opérant "en poursuite".

Des problèmes se posent si l'arrivée des paires d'impulsions intéressantes est complètement aléatoire: c'est ce qui se produit dans les balises et les équipements de bord opérant en "mode de recherche".

Dans l'art antérieur, un certain nombre de décodeurs sur première impulsion utilisent le même principe: toute impulsion incidente doit être considérée comme impulsion intéressante jusqu'à l'arrivée d'une seconde impulsion. La première impulsion incidente est conservée si le codage est correct, autrement dit si la seconde impulsion survient avec une certaine tolérance dans un délai correspondant à un "mode" d'interrogation; dans le cas contraire, elle est rejetée.

Il est donc nécessaire de mettre en mémoire l'instant d'arrivée de toute impulsion incidente jusqu'à l'arrivée d'une éventuelle seconde. Toutefois, ces opérations de mise en mémoire d'une impulsion et de reconnaissance d'un mode d'interrogation intéressant doivent être effectuées avec une précision au moins égale à celle qui est demandée au système, soit environ 0,02 $\mu$s dans le cas du TACAN ou DME, et sans que le traitement logique des impulsions, après détection, conduise dans le cas de réception d'un grand nombre d'impulsions non codées ou mal codées à une baisse de l'efficacité de réponse.

Dans l'art connu, le type de dispositif le mieux adapté au problème est celui qui utilise pour le décodage un registre à décalage activé en permanence par une horloge de fréquence F. En effet, ce type de dispositif ne présente aucune perte d'efficacité en réponse.

Toute impulsion arrivant à l'entrée du registre y pénètre au coup d'horloge qui suit immédiatement cette arrivée. L'horloge étant asynchrone par rapport à l'impulsion, l'instant de pénétration de l'impulsion dans le registre est défini à une période T d'horloge près

$$(T=\frac{1}{F}).$$

On appelle e le temps qui s'écoule entre l'arrivée d'une impulsion et sa pénetration dans le registre.

En admettant que l'incertitude correspondante qui statistiquement vaut

$$\frac{T}{2}$$

est la seule erreur du système, on en déduit la fréquence F de l'horloge:

$$\frac{1}{2F}=0,02 \ \mu s \ \text{soit F}=25 \ \text{MHz}.$$

Pour le mode d'interrogation d'écartement maximal en mode TACAN ou DME, soit $t_m=36\pm2 \ \mu$s, le registre à décalage doit avoir un nombre de pas au moins égal à

$$t_m \times F=38 \times 10^{-6} \times 25 \times 10^6=950.$$

Pratiquement, le registre doit être constitué de 1000 bascules bistables avec une fréquence de progression de 25 MHz qui astreint à utiliser une technologie du type "TTL" rapide, qui conduit à un registre dont le coût et l'encombrement sont considérables.

Pour remédier à cet inconvénient, on a utilisé un registre à décalage activé par une horloge qui n'est déclenchée que lorsqu'une impulsion arrive à l'entrée du registre.

Dans ce cas, le déclenchement de l'horloge et l'entraînement du registre sont quasi synchrones du front avant de l'impulsion incidente.

La précision est donc très grande et indépendante de la période de l'horloge. On réduit donc la fréquence de l'horloge, ce qui permet de réduire le nombre de bascules, mais un inconvénient de ce second type de réalisation est une perte d'efficacité en réponse très importante. En effet, le registre ne peut traiter deux impulsions incidentes en même temps.

On a réduit cette perte d'efficacité en munissant chacune des sections de comptage de moyens permettant de les remettre à zéro séparément, mais une perte d'efficacité importante persiste.

Par ailleurs la précision ainsi obtenue est un peu illusoire puisqu'elle revient à fixer le déclenchement de l'horloge par l'impulsion incidente et que dans ces conditions cette horloge est indépendante de celle utilisée dans les circuits d'exploitation situés en aval du décodeur. Le problème de la précision est ainsi reporté sur la mesure de l'écart de phase entre l'horloge du décodeur et celle des circuits d'exploitation, avec en plus un risque d'écart de synchronisme.

Une solution similaire est décrite dans le brevet US 3 940 764 de Dennis Edwing Beeswing, où l'impulsion incidente déclenche la remise à zéro d'un compteur (Fig. 4, CR1) qui compte une horloge "fine" (Fb) permanente qui peut dans ce cas provenir d'une horloge centrale utilisée par les circuits d'exploitation. Cette horloge est divisée par 16 pour donner une horloge "grosse" (Fc) qui fait progresser le registre de décodage (37). La valeur de cette horloge "grosse" est transférée lors du décodage de la paire d'impulsions dans un registre de sortie (L2) qui reçoit également la valeur de l'horloge "fine".

Ce dispositif présente au moins deux inconvénients:

— d'une part il ne peut pas prendre en compte deux impulsions se succédant à une période inférieure à celle de l'horloge "grosse". Si donc une telle première impulsion est erronée, elle peut masquer une bonne impulsion arrivant trop tôt après elle;
— d'autre par le décodage n'est effectif qu'à la fin d'une période de l'horloge "grosse" (Fig. 5, latched 10 sur CR1), et ce décodage est trop tardif dans certains cas, notamment ceux où l'on doit activer des suppresseurs d'échos juste après l'arrivée de la seconde impulsion de la paire.

Par ailleurs, bien que pour les besoins de l'explication, le brevet US—A—3 940 764 représente (Fig. 5) son horloge "fine" en phase avec les impulsions à décoder, il est clair qu'il n'en est généralement rien et que le problème de la précision sur l'instant d'arrivée du front avant de la première impulsion reste entier, d'autant plus que la demi-période de cette horloge est de l'ordre de grandeur de la durée des impulsions comme on le remarque sur la figure, ce qui lui permet d'utiliser des circuits relativement lents, mais ne peut donner la précision souhaitée citée plus haut.

Selon l'invention, le décodeur a pour base un décodeur classique du type à registre à décalage activé en permanence par une horloge de fréquence F d'une précision relativement grossière pour pouvoir utiliser un registre à décalage ayant un nombre raisonnable d'étages.

Cette horloge actionne un compteur à N étages dont les différents états successifs déterminent une échelle de temps dont les temps élémentaires sont représentés par une succession de nombres de N bits. Le décodeur classique pointe l'un de ces nombres qui donne en fait l'heure du temps élémentaire d'horloge à l'intérieur duquel la première impulsion est arrivée, avec une erreur e fluctuante par rapport au début de ce temps. Pour améliorer la précision, on part d'une horloge primaire à fréquence f supérieure à F et déterminée par la précision voulue. L'horloge (appelée alors secondaire) à fréquence F est obtenue par division de l'horloge primaire dans un compteur à n étages dont les $k=(k=2^n)$ différents états successifs déterminent une subdivision de chacun des temps élémentaires de l'horloge secondaire et permettent de mesurer e par un nombre de n bits qui, pris avec le nombre de N bits, donne le moment d'arrivée de la première impulsion avec la précision fournie par l'horloge primaire. Pour effectuer ces opérations, à chaque arrivée d'une impulsion à décoder on inscrit le contenu du compteur à n étages dans une mémoire vive à un emplacement dont l'adresse est donnée par le contenu du compteur à N étages. Le nombre de N bits obtenu lors du décodage donne simultanément le temps élémentaire qui indique le moment d'arrivée de la première impulsion à décoder, et l'adresse de l'emplacement de la mémoire où se trouve le nombre de n bits qui mesure e et qui sert à compléter le nombre de N bits.

Les objets et caractéristiques de la présente invention apparaîtront plus clairement à la lecture de la description suivante d'un exemple de réalisation, ladite description étant faite en relation avec les dessins ci-annexés, dans lesquels:

— la figure 1 représente, schématiquement, un exemple de réalisation de décodeur selon l'invention;
— la figure 2 rappelle l'allure des signaux lors du fonctionnement du décodeur classique seul.

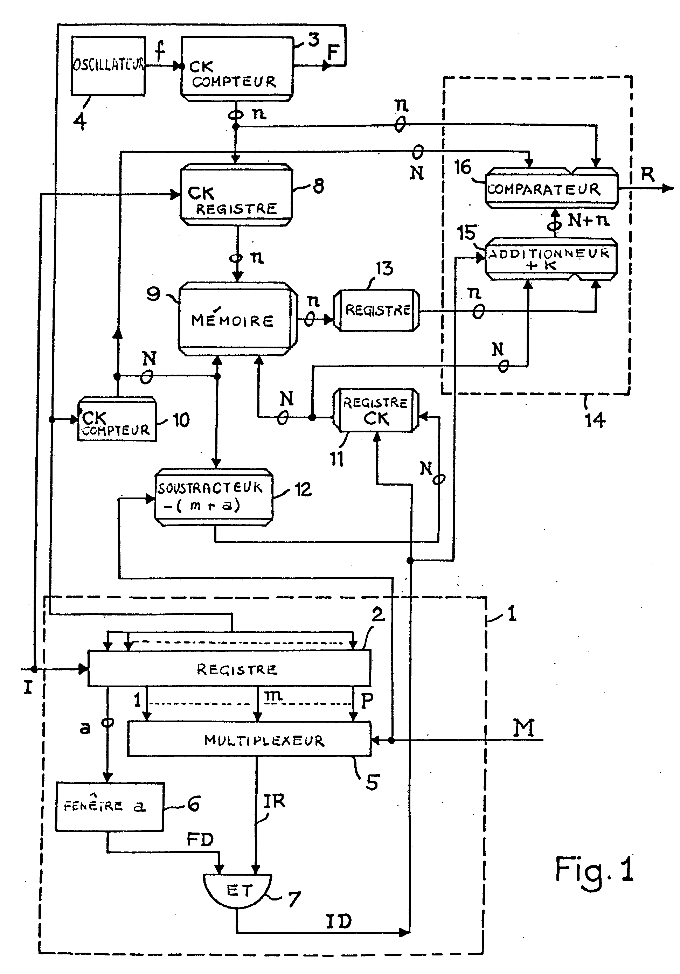

A la figure 1, on a tout d'abord représenté un décodeur classique 1 du type comportant un registre à décalage 2 de décodage activé en permanence par une horloge de fréquence F et qui reçoit les impulsions I à décoder. Un tel décodeur est notamment deirit dans l'introduction du brevet Beeswing, wl. 1 l. 49 à 58.

Le signal d'horloge de fréquence F est obtenu à la sortie d'un compteur 3 à n bascules qui divise par k (k=2$^n$) la fréquence f de l'oscillateur 4.

La fréquence f de 4 est choisie en fonction de la précision désirée. En effet, l'heure d'arrivée de la première impulsion est connue à une période

$$\frac{1}{f}$$

de l'oscillateur près, comme on le verra dans la suite.

Dans le cas du TACAN ou DME, en supposant que la précision désirée soit 0,03 µs (correspondant à une erreur statistique de 0,015 µs) la fréquence f doit être égale à 32 MHz. On suppose maintenant que n=5, cela entraîne que:

$$F=\frac{f}{2^n}=1 \text{ MHz et } T=\frac{1}{F}=1 \text{ µs.}$$

Le registre de décodage doit comporter p+a pas, pT devant être égal au temps maximum d'espacement des impulsions à décoder et aT à la tolérance maximum du décodage. Dans le cas du TACAN ou DME, on a pT=36 µs et aT=2 µs, ce qui donne 38 pas pour le registre de décodage.

Un multiplexeur 5 est connecté aux sorties des différentes sections de comptage du registre 2. Ce multiplexeur permet de choisir le temps d'espacement m des deux impulsions d'une paire à décoder; celui-ci est fixé par le choix du mode M d'interrogation. Dans le cas du TACAN ou DME, deux types d'impulsions sont à décoder, celles espacées de 12 µs et celles espacées de 36 µs.

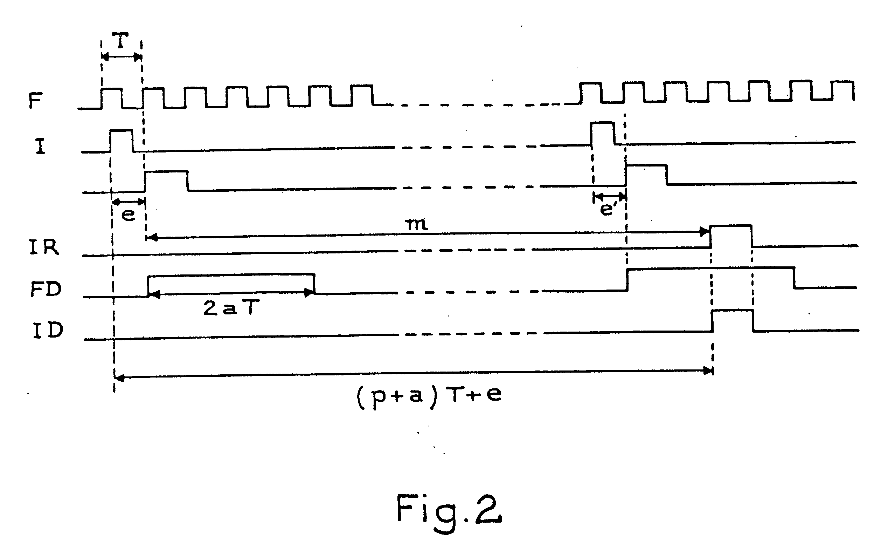

Ce type de décodeur 1 comporte également un déclencheur 6 de fenêtre de tolérance de décodage de durée au plus égale à 2 aT, soit 4 µs dans le cas de l'exemple choisi. Ce déclencheur rassemble les sorties de a étages successifs connue la porte 13 de la fig. 2 du brevet Beeswing.

Il comporte, enfin, une porte à coïncidence de décodage 7 faisant la coïncidence entre la fenêtre de décodage et l'impulsion retardée de (m+a) T par le registre. Cette porte 7, ici une porte logique ET connue la porte so de la figure 2 du brevet Beeswing, fournit le signal ID formé d'impulsions décodées indiquant chacune le décodage d'une paire d'impulsions.

A la figure 2, on a représenté l'allure des signaux obtenus lors du fonctionnement du décodeur 1 classique seul.

A la première ligne est représente le signal d'horloge F, à la seconde les impulsions à décoder I, à la troisième on a représenté la pénétration des impulsions dans le registre de décodage 2. A la quatrième ligne, on a représente les impulsions retardées IR du temps m correspondant au mode M choisi, à la cinquième, FD représente la fenêtre de tolérance de décodage et, enfin, à la sixième ligne, les impulsions ID décodées sont représentées.

Sur cette figure 2, on a indiqué clairement l'erreur e fluctuant comprise entre O et T, qui correspond au temps qui s'écoule entre l'arrivée d'une impulsion et sa pénétration dans le registre de décodage.

L'objet de l'invention est de mémoriser, pour toutes les impulsions présentes dans le registre de décodage, l'erreur e afin de la restituer au moment du décodage.

Les premiers moyens de mémorisation de l'erreur e comportent tout d'abord l'oscillateur 4 et le compteur 3 décrits ci-dessus.

Ils comportent ensuite en registre 8 à n entrées et n sorties dont les n entrées sont reliées aux n sorties du compteur 3 et dont l'entrée d'horloge CK reçoit le signal I à décoder. A l'apparition de chaque impulsion du signal I, le contenu du compteur 3 qui représente l'erreur e, à

$$\frac{1}{f}$$

près, est transféré en sortie du registre 8.

Le registre 8 est suivi par une mémoire 9 vive à accès aléatoire de 2$^n$ mots de n bits. Cette mémoire 9 est adressée en écriture par un compteur 10 à N bascules qui reçoit en entrée d'horloge CK le signal d'horloge de fréquence F issu du compteur 3.

L'arrangement qui précède a pour résultat, à l'apparition de chaque impulsion du signal I, l'écriture dans la mémoire 9 de l'erreur e à l'adresse indiquée par le compteur 10.

Les erreurs e relatives à toutes les impulsions présentes dans le registre de décodage 2 sont ainsi mises en mémoire dans le mémoire vive à accès aléatoire 9. Pour cette raison, le temps de cycle du compteur 10, égal à 2$^N$.T, doit être supérieur au temps d'espacement maximal compte tenu de la tolérance. Dans notre exemple, il faut donc que 2$^N$.T soit supérieur à (p+a) T, c'est-à-dire que 2$^N$ soit supérieur à 38; on choisit N=6.

Ensuite, interviennent les seconds moyens de restitution de l'erreur e. Ils comportent un registre 11 à N entrées et N sorties dont l'entrée d'horloge reçoit le signal ID provenant du décodeur 1 classique et dont les N entrées reçoivent les N sorties du soustracteur 12 qui soustrait en permanence le nombre fixe m+a au contenu du compteur 10. On rappelle qu m est le temps d'espacement des impulsions à décoder et qu'il dépend du mode M d'interrogation.

Dans notre exemple, on a:

en mode X, mT=12 µs d'où (m+a) T=14 µs

en mode Y, mT=16 µs d'où (m+a) T=38 µs.

Le mot de N éléments binaires résultat de la soustraction effectuée par 12 est transféré à la sortie du registre 11 par toute impulsion décodée du signal ID et ce registre 11 adresse en lecture la mémoire 9.

Cette adresse de lecture est exactement l'adresse de la mémoire où est stocké le mot de n élémentes binaires correspondant à l'erreur e dont est affectée l'impulsion décodée. Ce mot est alors lu et transféré dans un registre 13.

Au moment du décodage, c'est-à-dire au moment de l'apparition d'une impulsion du signal ID (moment repéré dans le temps par l'état des deux compteurs 10 et 3), l'état des deux registres 11 et 13 fournit un mot de N+n éléments binaires qui donne le moment d'arrivée exact, à

$$\frac{1}{f}$$

près, de la première des impulsions de la paire décodée.

Sur la figure 1, un exemple d'exploitation du résultat obtenu par le circuit précédent est représenté par le circuit 14.

Dans cet exemple d'exploitation, le décodage de la réception d'une paire d'impulsions entraîne le déclenchement d'une impulsion ou d'une paire d'impulsions de réponse R, comme. dans le cas du TACAN ou DME.

Le déclenchement de cette impulsion doit se produire avec un temps de retard K après l'instant significatif d'arrivée de la première impulsion de la paire reçue. Ce temps K est fixé par la spécification des équipements; par exemple, en TACAN ou DME en mode Y ce temps K est tel que, ayant considéré les retards des circuits de réception et d'émission, l'impulsion de réponse est émise 56 $\mu$s après l'arrivée de la première impulsion de la paire reçue.

Ce circuit 14 d'exploitation comporte, en premier lieu, un aditionneur 15 qui additionne un nombre fixe K (correspondant au temps de retard) au mot formé par les N+n éléments binaires issus des registres 11 et 13 et donnant le moment d'arrivée de la première impulsion de la paire reçue.

Le mot obtenu à la sortie de l'additionneur 15 représente dans le moment d'emission de l'impulsion de réforme. Il est est comparé par le comparateur 16 au mot formé par les N+n éléments binaires 10 issus des compteurs 10 et 3 et qui représente le temps qui s'écoule dans la même echelle ou sont représente les moments d'arrivée de la première impulsion et d'emission de l'impulsion de réponse.

Quand les deux mots comparés sont identiques c'est á duic quand le moment d'emission de l'emulsion de réponse est arrivée, le comparateur 16 déclenche une impulsion de réponse R.

La description précédente permet de faire ressortir les avantages de l'invention.

Le décodeur, objet de l'invention, présente l'efficacité de décodage à 100% d'un décodeur classique, mais en plus il donne avec une très grande précision le temps d'arrivée de la première impulsion d'une paire. Cette précision ne pourrait être affectée que par la présence d'impulsions parasites se succédant à des cadences supérieures à F.

D'autre part, l'impulsion décodée et la seconde impulsion de la paire sont obtenues pratiquement simultanément, à 2 $\mu$s près; l'impulsion décodée peut donc être utilisée efficacement par les circuits suppresseurs d'échos du récepteur.

Enfin, l'obtention de l'heure d'arrivée (ou instant significatif) de la première impulsion d'une paire, sous la forme d'un mot de N+n éléments binaires, est particulièrement bien adaptée à l'exploitation ultérieure de cette information par un calculateur numérique.

**Revendications**

1. Décodeur de précision sur la première impulsion d'une paire, comportant un registre à décalage (2) activé en permanence par un signal d'horloge de fréquence F et recevant les impulsions à décoder, des moyens (6) pour déterminer une fenêtre de tolérance de décodage, un multiplexeur (5) pour sélectionner une sortie du registre à décalage selon le mode d'interrogation utilisé, une porte (7) à coïncidence de décodage pour recevoir les signaux de sortie des moyens pour déterminer une fenêtre de tolérance et du multiplexeur et fournir lorsque ces signaux sont en coïncidence une impulsion décodée (ID) qui indique le décodage d'une paire, caractérisé en ce qu'il comprend en outre:

— une horloge (4) pour fournir un signal d'horloge primaire de fréquence f déterminée par la précision désirée;
— un premier compteur binaire (3) à n bascules, pour diviser par $k(k=2^n)$ le signal d'horloge primaire et fournir un signal d'horloge secondaire de fréquence F dont la précision est inférieure à celle de l'horloge primaire et qui est le signal d'horloge appliqué au registre à décalage (2);
— un second compteur binaire (10) à N bascules pour décompter les périodes du signal d'horloge secondaire;
— un premier registre (8) pour mémoriser sur la commande de chaque impulsion à décoder le contenu du premier compteur (3);
— une mémoire vive (9) à accès aléatoire de $2^N$ mots de n bits pour stocker les différents contenus successifs du premier registre (8) sous la commande du second compteur binaire dont le contenu donne l'adresse du mot qui doit être inscrit;
— un soustracteur (12) pour soustraire du contenu du second compteur binaire (10) un nombre m+a déterminé par la somme de l'intervalle entre deux impulsions successives à décoder et de la largeur de la fenêtre de tolérance;

— un deuxième registre (11) pour mémoriser sur la commande de l'impulsion décodée (ID) le résultat de cette soustraction et commander la lecture de la mémoire vive (9) par un mot de N bits, qui donne l'adresse du mot à lire et qui représente le moment d'arrivée de la première impulsion à décoder de la paire avec la précision du signal d'horloge secondaire; et

— un troisième registre (13) pour mémoriser le mot de n bits lu dans la mémoire vive (9), ce mot de n bits complétant le mot de N bits pour former un mot de N+n bits formant le signal de sortie du décodeur et qui réprésente le moment d'arrivée de la première impulsion à décoder de la paire avec la précision du signal d'horloge primaire.

2. Décodeur selon la revendication 1, caractérisé en ce qu'il comprend en outre:

— un additionneur (15) pour additionner au mot de N+n bits un nombre K représentant un retard déterminé par rapport au moment d'arrivée de la première impulsion à décoder de la paire; et

— un comparateur (16) pour comparer le résultat de cette addition au contenu des premier (3) et second (10) compteurs, et délivrer lorsque ces signaux deviennent égaux une impulsion (r) de réponse à la paire de signaux reçus.

**Patentansprüche**

1. Präzisionsdecoder, der die Decodierung am ersten Impuls eines Impulspaares vornimmt, mit einem Schieberegister (2), das dauernd durch ein Taktsignal der Frequenz F aktiviert ist und die zu decodierenden Impulse empfängt, Mitteln (6) zur Festlegung eines Decodier-Toleranzfensters, einen Multiplexer (5) zum Auswählen eines Ausganges des Schieberegisters je nach der angewendeten Abfrageart, einem Decodier-Koinzidenztor (7) zum Empfang der Ausgangssignale der Mittel zur Festlegung eines Toleranzfensters und des Multiplexers und zum Abgeben eines decodierten Impulses (ID), wenn diese Signale in Koinzidenz sind, wobei dieser decodierte Impuls die Decodierung eines Paares anzeigt, dadurch gekennzeichnet, daß er ferner enthält:

— einen Taktgeber (4) zum Abgeben eines primären Taktsignals der Frequenz f, die durch die gewünschte Präzision bestimmt ist;

— einen ersten Binärzähler (3) mit n Kippschaltungen zur Teilung des primären Taktsignals durch k($k=2^n$) und zum Abgeben eines sekundären Taktsignals der Frequenz F, dessen Präzision geringer ist als diejenige des primären Taktgebers und bei dem es sich um das an das Schieberegister (2) angelegte Taktsignal handelt;

— einen zweiten Binärzähler (10) mit N Kippschaltungen zum Herunterzählen der Perioden des sekundären Taktsignals;

— ein erstes Register (8) zum Speichern des Inhalts des ersten Zählers (3) bei Steuerung durch jeden zu decodierenden Impuls;

— einen Schreib/Lesespeicher (9) mit willkürlichem Zugriff zu $2^N$ Worten aus n Bits zum Speichern der verschiedenen aufeinanderfolgenden Inhalte des ersten Registers (8) unter Steuerung durch den zweiten Binärzähler, dessen Inhalt die Adresse des einzuschreibenden Wortes angibt;

— einen Subtrahierer (12) zum Subtrahieren einer Zahl m+a, welche durch die Summe des Intervalls zwischen zwei aufeinanderfolgenden zu decodierenden Impulsen und die Breite des Toleranzfensters bestimmt ist, von dem Inhalt des zweiten Binärzählers (10);

— ein zweites Register (11) zum Speichern des Ergebnisses dieser Subtraktion bei Steuerung durch den decodierten Impuls (ID) und zur Steuerung des Auslesens aus dem Schreib/Lesespeicher (9) durch ein M Bit-Wort, welches die Adresse des auszulesenden Wortes angibt und den Ankunftszeitpunkt des ersten zu decodierenden Impulses des Paares mit der Präzision des sekundären Taktsignals darstellt; und

— ein drittes Register (13) zum Speichern des n Bit-Wortes, das aus dem Schreib/Lesespeicher (9) ausgelesen wird, wobei dieses n Bit-Wort das N Bit-Wort vervollständigt, um ein Wort aus N+n Bits zu bilden, welches das Ausgangssignal des Decoders bildet und den Ankunftszeitpunkt des ersten zu decodierenden Impulses des Paares mit der Präzision des primären Taktsignals darstellt.

2. Decoder nach Anspruch 1, dadurch gekennzeichnet, daß er ferner enthält:

— einen Addierer (15) zum Addieren einer Zahl K zu dem Wort aus N+n Bits, wobei diese Zahl K eine bestimmte Verzögerung in bezug auf den Ankunftszeitpunkt des ersten zu decodierenden Impulses des Paares darstellt; und

— einen Komparator (16) zum Vergleichen des Ergebnisses dieser Addition mit dem Inhalt des ersten (3) und des zweiten (10) Zählers und zum Abgeben eines auf das empfangene Signalpaar antwortenden Antwortimpulses (R), wenn diese Signale gleich werden.

**Claims**

1. Precision decoder decoding the first pulse of a pair, comprising a shift register (2) continuously activated by a clock signal of the frequency F and receiving the pulses to be decoded, means (6) for defining a decoding tolerance window, a multiplexer (5) for selecting one output of the shift register in accordance with the interrogation mode used, a coincidence decoding gate (7) for receiving the output signals of the means for defining a tolerance window and of the multiplexer and providing a decoded pulse (ID) indicating the decoding of a pair when these signals are in coincidence, characterised in that it further comprises:

— a clock (4) providing a primary clock signal of the frequency f determined by the desired precision;
— a first binary counter (3) having n bistables for dividing the primary clock signal by $k(k=2^n)$ and providing a secondary clock signal of the frequency F the precision of which is inferior to that of the primary clock, and which is the clock signal applied to the shift register (2);
— a second binary counter (10) having N bistables for counting down the periods of the secondary clock signal;
— a first register (8) for storing the content of the first counter (3) upon control of each pulse to be decoded;
— a read/write random access memory (9) having $2^N$ n bit bytes for storing the different successive contents of the first register (8) under control of the second binary counter the input of which provides the address of the word to be stored;
— a subtractor (12) for subtracting a number m+a determined by the sum of the interval between two successive pulses to be decoded and the width of the tolerance window from the content of the second binary counter (10);
— a second register (11) for storing the result of said subtraction upon control of the decoded pulse (ID) and for controlling reading of the read/write memory (9) through an N bit word, indicating the address of the word to be read and representing the arrival moment of the first pulse to be decoded of the pair with the precision of the secondary clock signal; and
— a third register (13) for storing the n bit byte read from the read/write memory (9), this n bit byte completing the N bit byte for forming a word of N+n bits forming the output signal of the decoder and representing the arrival moment of the first pulse to be decoded of the pair with the precision of the primary clock signal.

2. Decoder in accordance with claim 1, characterised in that it further comprises:

— an adder (15) for adding a number K to the N+n bit word, said number K representing a determined delay with respect to the arrival moment of the first pulse to be decoded of the pair; and
— a comparator (16) for comparing the result of this addition with the content of the first (3) and second (10) counter and for providing a response pulse (R) in response to the signal pair received when these signals become equal.

Fig. 1

Fig.2